# EUROPÄISCHE PATENTSCHRIFT

(11) **EP 1 183 176 B1**
(45) Veröffentlichungstag und Bekanntmachung des Hinweises auf die Patenterteilung: **18.12.2002**
(21) Anmeldenummer: 00931215.8
(22) Anmeldetag: 15.05.2000
(51) Int. Cl.: B62D 6/04, B60K 28/16, B62D 5/04

(54) **LENKVORRICHTUNG UND LENKVERFAHREN**
STEERING SYSTEM AND STEERING METHOD
MECANISME ET PROCEDE DE DIRECTION

(30) Priorität: 20.05.1999 DE 19923012
(43) Veröffentlichungstag der Anmeldung: 06.03.2002
(73) Patentinhaber: ZF FRIEDRICHSHAFEN Aktiengesellschaft, 88038 Friedrichshafen (DE)
(72) Erfinder: PAUL, Andreas, D-88045 Friedrichshafen (DE)
(86) Internationale Anmeldenummer: EP0004345
(87) Internationale Veröffentlichungsnummer: WO00071404

(56) Entgegenhaltungen:
- EP-A- 0 473 112
- EP-A- 0 718 173
- DE-A- 3 837 864
- DE-A- 4 239 831
- US-A- 5 828 972

## Beschreibung

Die Erfindung betrifft eine Lenkvorrichtung für ein Kraftfahrzeug nach dem Oberbegriff des Hauptanspruches sowie ein Verfahren zum Betrieb der Lenkvorrichtung.

In vielen Fällen weist eine Lenkvorrichtung für ein Kraftfahrzeug mit lenkbaren Rädern neben einem vom Fahrer betätigbaren Lenkorgan einen Aktuator für den Einschlagwinkel der lenkbaren Räder auf. Als Aktuatoren werden elektrische oder hydraulische Hilfskrafteinrichtungen parallel zu einer mechanischen Übertragungseinrichtung oder bei sogenannten "Steer-by-wire"-System als ausschließliche Stellglieder eingesetzt.

Ein solches "Steer-by-wire"-System umfaßt üblicherweise auch eine elektronische Steuereinrichtung und ist beispielsweise aus der gattungsbildenden DE-OS 196 32 251 bekannt.

Weitere Lenkvorrichtungen sind in US 5 828 972, DE 4 239 831 und DE 3 837 864 beschrieben.

Die Mehrzahl der modernen Fahrzeuge ist im Kurvengrenzbereich untersteuernd ausgelegt. Bei Annäherung an den Kurvengrenzbereich tritt zuerst an den eingelenkten Vorderrädern ein Querschlupf auf, so daß das Fahrzeug über die Vorderräder schiebt und verzögert. Ein weiterer Radeinschlag führt lediglich zu verstärktem Abbremsen, wobei jedoch die Querbeschleunigung abnimmt. Ein geübter Fahrer erkennt das Untersteuern und lenkt nur so weit ein, wie die jeweilige Fahrsituation es zuläßt.

Viele ungeübte Fahrer reagieren jedoch in einer solchen Situation falsch. Beispielsweise aus dem Wunsch, einem Hindernis auszuweichen, lenken sie immer weiter ein mit dem Ergebnis, daß das Fahrzeug zwar verzögert, nicht jedoch dem gewünschten Kurvenradius folgt. Diese Fehlreaktion ist bei wechselndem Fahrbahnzustand besonders kritisch: Wird beispielsweise auf glatter Fahrbahn in der beschriebenen Weise voll eingelenkt und finden die Vorderräder auf einem griffigen Fahrbahnabschnitt plötzlich wieder Halt, kann das Fahrzeug außer Kontrolle geraten.

Der Erfindung liegt die Aufgabe zugrunde, eine Lenkvorrichtung und ein Lenkverfahren zu schaffen, welche auch ungeübte Fahrer unterstützen, die beschriebene Fehlreaktion zu vermeiden.

Die Aufgabe wird gelöst durch eine Lenkvorrichtung mit den Merkmalen des Hauptanspruchs und ein Lenkverfahren zum Betrieb der Lenkvorrichtung nach dem ersten Verfahrensanspruch.

Vorteilhafte Ausgestaltungen sind durch die Merkmale der übrigen Unteransprüche gegeben.

Nach der Erfindung ist eine Einrichtung zur Ermittlung eines an den lenkbaren Rädern auftretenden Querschlupfs vorgesehen. In der elektronischen Steuereinrichtung ist ein oberer Grenzwert für den Querschlupf ermittelbar, welcher mit dem Wert des ermittelten Querschlupfs verglichen wird. Es ist mindestens ein Mittel vorgesehen, welches dazu dient, einer weiteren Vergrößerung des Einschlagwinkels entgegenzuwirken, wenn der ermittelte Querschlupf größer als der obere Grenzwert ist. Als Maß für den auftretenden Querschlupf kann beispielsweise der Schräglaufwinkel verwendet werden. Dieser kann in der elektronischen Steuereinrichtung aus bei in Fahrzeugen mit elektronischer Fahrdynamikregelung ohnehin vorhandenen Signalen eines Gierratensensors, von Radstellungssensoren und der Fahrzeuggeschwindigkeit berechnet werden. Der Grenzwert für den Querschlupf ist im einfachsten Fall ein vorgebbarer Festwert, der in der elektronischen Steuereinrichtung gespeichert ist. Es ist jedoch auch möglich, den Grenzwert dynamisch abhängig von Fahrzustandsparametern, wie Geschwindigkeit, zu ermitteln. Ist der tatsächlich auftretende Querschlupf bzw. der Schräglaufwinkel größer als der obere Grenzwert, wird darauf geschlossen, daß eine Fehlreaktion des Fahrers vorliegt, der zu weit einlenkt. Für diesen Fall ist mindestens ein Mittel vorgesehen, welches dazu dient, einer weiteren Vergrößerung des Einschlagwinkels entgegenzuwirken. Vorteilhaft dabei ist, daß der Fahrer dabei unterstützt wird, seine Fehlreaktion zu vermeiden, womit die Fahrsicherheit erhöht wird.

Ein zu großer Einschlagwinkel kann zuverlässig verhindert werden, wenn das Mittel, welches einer weiteren Vergrößerung des Einschlagwinkels entgegenwirkt, der Aktuator für den Einschlagwinkel ist, wobei die elektronische Steuereinrichtung den Stellweg des Aktuators nach oben begrenzt.

Ein weniger starker Eingriff in die Lenkfunktion erfolgt, wenn ein von der elektronischen Steuereinrichtung angesteuerter Warnsignalgenerator vorgesehen ist, welcher ein vom Fahrer wahrnehmbares Warnsignal erzeugt, wenn der ermittelte Querschlupf größer ist als der obere Grenzwert.

Bei Lenkvorrichtungen ohne mechanische Verbindung zwischen Lenkorgan und Aktuator ist üblicherweise ein Lenkorganaktuator vorgesehen, welcher die vom Fahrer wahrnehmbare Lenkkraft erzeugt. Vorteilhaft ist, diesen Lenkorganaktuator als Warnsignalgenerator zu verwenden. Hiermit wird ein Lenkverfahren ermöglicht, bei welchem vom Lenkorganaktuator eine erhöhte Lenkkraft erzeugt wird, wenn der ermittelte Querschlupf größer ist als der obere Grenzwert. Der Fahrer spürt eine sehr deutliche Rückmeldung, wenn die erzeugte Lenkkraft beim Überschreiten des oberen Grenzwertes sprunghaft um einen vorgebbaren Betrag ansteigt. Alternativ oder zusätzlich zur erhöhten Lenkkraft kann vom Lenkorganaktuator ein Vibrieren des Lenkorgans erzeugt werden. Ähnlich wie bei einer ABS-Bremsung, bei der das Bremspedal vibriert, wird dem Fahrer von einem vibrierenden Lenkrad vermittelt, daß er sich in einem Grenzbereich der Reifenhaftung befindet. Es versteht sich von selbst, daß die verschiedenen Warnsignale miteinander kombiniert werden können oder daß auch andere Warnsignalgeneratoren vorgesehen werden können, die akustisch oder optisch wirken.

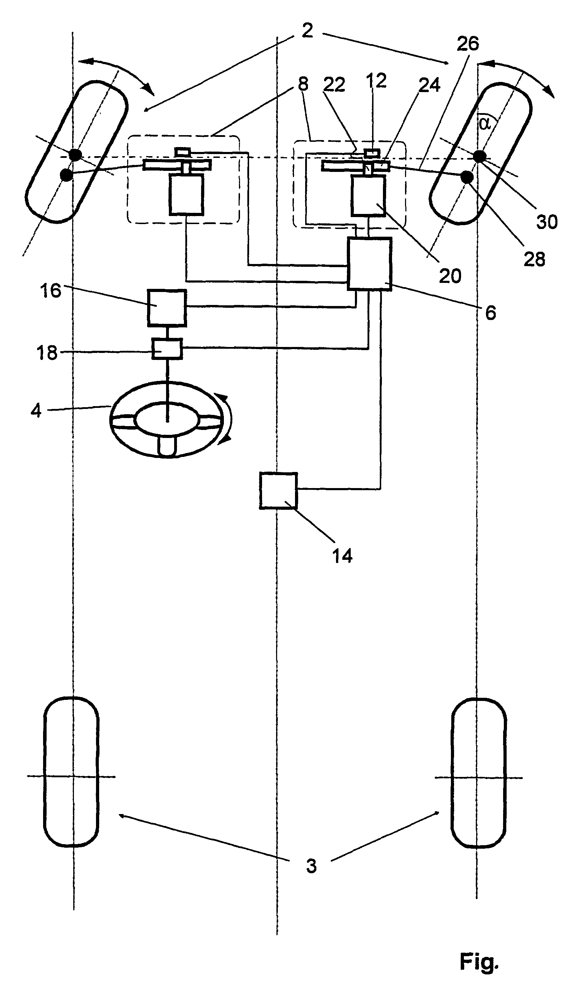

Im folgenden wird die Erfindung mit Bezug auf die beiliegende Figur näher erläutert.

In der schematischen Darstellung sind mit 2 die lenkbaren Vorderräder eines Fahrzeugs und mit 3 die Hinterräder bezeichnet. Die dargestellte Lenkvorrichtung ist eine sogenannte "Steer-by-wire"-Lenkung, ohne mechanische Koppelung von Lenkorgan 4 und den lenkbaren Rädern 2. Die Lenkstellung des Lenkorgans, welches als Lenkrad 4 ausgebildet ist, wird von dem Lenkwinkelsensor 18 erfaßt. Dessen Ausgangssignal wird auf die elektronische Steuereinrichtung 6 geleitet. Von dieser aus erfolgt die Ansteuerung der Aktuatoren 8 für den Einschlagwinkel α der lenkbaren Räder. In der darstellten Ausführungsform ist für jedes der lenkbaren Vorderräder 2 ein Aktuator 8 vorgesehen. Jeder Aktuator 8 weist einen Stellmotor 20 auf, der über ein Ritzel 22 eine axial verschiebbare Zahnstange 24 antreibt. Die Axialbewegung der Zahnstange 24 wird über eine Stange 26 auf einen Anlenkpunkt 28 der Radaufhängung übertragen, welcher von der für die Lenkbewegung maßgeblichen Drehachse 30 beabstandet ist. Selbstverständlich sind für die Erfindung grundsätzlich auch andere bekannte Ausgestaltungen von Aktuatoren verwendbar.

Der Sensor 12 erfaßt die Stellposition des Aktuators. Das Ausgangssignal wird auf die elektronische Steuerungseinrichtung 6 zurückgeführt, so daß dort der Radeinschlägwinkel ermittelt bzw. eine Regelung des Radeinschlagwinkels vorgenommen werden kann.

Der Lenkorganaktuator 16 wird ebenfalls von der elektronischen Steuerungseinrichtung angesteuert und ist in trieblicher Verbindung mit dem Lenkrad 4. Der Lenkorganaktuator 16 erzeugt die vom Fahrer zu überwindende Lenkkraft bzw. das am Lenkrad anstehende Lenkmoment. Mit 14 ist schließlich noch ein Gierratensensor bezeichnet, dessen Ausgangssignal ebenfalls auf die elektronische Steuereinrichtung 6 geleitet ist. Der Gierratensensor 14 dient zur Ermittlung des an den lenkbaren Rädern 2 auftretenden Querschlupfs bzw. des dort auftretenden Schräglaufwinkels. Aus dem Radeinschlagwinkel α, welcher mit dem Stellungssensor 12 ermittelt wird, und der Fahrzeuggeschwindigkeit läßt sich die Gierrate des Fahrzeugs dann ermitteln, wenn kein Querschlupf an den lenkbaren Rädern 2 auftritt. Ist die so ermittelte Gierrate kleiner als die mit dem Sensor 14 gemessene Gierrate, so kann bei einem untersteuernd ausgelegten Fahrzeug darauf geschlossen werden, daß ein Querschlupf an den Vorderrädern auftritt. Die Differenz der beiden Werte ist ein Maß für den Querschlupf bzw. für den Schräglaufwinkel.

Jede andere Möglichkeit, den Querschlupf an den lenkbaren Rädern hinreichend genau zu ermitteln, z. B. mit optischen, auf die Fahrbahn gerichteten Sensoren, ist ebenfalls für die Erfindung verwendbar.

Im Fahrbetrieb wird der tatsächlich auftretende Querschlupf bzw. der tatsächlich auftretende Schräglaufwinkel laufend ermittelt und in der elektronischen Steuerungseinrichtung mit dem oberen Grenzwert für den Querschlupf, welcher vorgebbar oder abhängig von bestimmten Fahrzustandsparametern ermittelbar ist, verglichen. Solange der tatsächliche Querschlupf kleiner als der Grenzwert ist, funktioniert die Lenkvorrichtung in bekannter Weise. Wird der obere Grenzwert jedoch überschritten, so wird darauf geschlossen, daß ein ungewolltes Fehlverhalten des Fahrers vorliegt, und es werden Mittel eingesetzt, welche dazu dienen, einer weiteren Vergrößerung des Einschlagwinkels entgegenzuwirken.

In einer Ausgestaltung der Erfindung wird direkt der Stellweg des Aktuators 8 nach oben begrenzt. Dies kann z. B. durch eine Regelung derart geschehen, daß der Radeinschlagwinkel so lange verkleinert wird, bis der tatsächliche Querschlupf wieder kleiner als der obere Grenzwert ist. Sobald dies der Fall ist, wird eine Vergrößerung des Einschlagwinkels wieder zugelassen, sofern diese vom Fahrer noch gewünscht ist. Eine Regelschwingung um den Radeinschlagwinkel, bei dem der auftretende Querschlupf gleich dem oberen Grenzwert ist, mit relativ kleiner Amplitude, kann durchaus erwünscht sein, wird doch hierdurch das von Rennfahrern praktizierte "Sägen" am Lenkrad simuliert. Hierbei kann der Lenkorganaktuator 16 dem Lenkrad 4 eine der Veränderung der Radeinschlagwinkel entsprechende Bewegung aufprägen. Da hierzu jedoch erhebliche Kräfte notwendig sind, die auch vom Fahrer unter Umständen nicht akzeptiert würden, ist es vorteilhafter, die Bewegung des Aktuators 8 bzw. der Aktuatoren von der Bewegung des Lenkrades in gewissem Maße zu entkoppeln. Dem Fahrer kann haptisch durch eine erhöhte Lenkkraft und/oder ein Vibrieren des Lenkrades mitgeteilt werden, daß die Lenkwinkelbegrenzung aktiv ist.

Diese Variante sieht also vor, daß das Fehlverhalten des Fahrers korrigiert wird, worüber der Fahrer dann lediglich eine Rückmeldung erhält. Die zweite Variante, bei welcher dem Fahrer beim Überschreiten des oberen Grenzwertes für den Querschlupf lediglich ein Warnsignal übermittelt wird, bezieht den Fahrer in den Regelkreis mit ein. Es erfolgt keine direkte Begrenzung des Einschlagwinkels durch Ansteuerung der Aktuatoren. Vielmehr wird dem Fahrer durch das Warnsignal der Hinweis gegeben, den Einschlagwinkel durch Betätigung des Lenkorgans 4 wieder zu verkleinern.

Das beschriebene Lenkverfahren eignet sich insbesondere für "Steer-by-wire"-Systeme. Bei herkömmlichen, hilfskraftunterstützten hydraulischen oder elektrischen Lenkungen mit starrer mechanischer Verbindung zwischen Lenkorgan und lenkbaren Rädern kann die Erfindung ebenfalls verwendet werden. Zwar ist hier keine Entkoppelung der Bewegung von Lenkrad und gelenkten Rädern möglich, jedoch ist es auch hier möglich, ein für den Fahrer wahrnehmbares Warnsignal zu erzeugen. Beispielsweise kann die Servounterstützung beim Überschreiten des oberen Grenzwertes durch einen Eingriff in die hydraulische oder elektrische Ansteuerung entsprechend verringert werden.

Bei der dargestellten Lenkvorrichtung ist für jedes lenkbare Rad 2 ein Aktuator 8 vorgesehen. Sofern der Querschlupf für jedes gelenkte Rad individuell ermittelt wird, ist es möglich, den Stellweg jedes Aktuators individuell nach oben zu begrenzen, wenn der ermittelte Querschlupf an dem jeweiligen Rad größer ist als der obere Grenzwert. Dies ist insbesondere auch dann vorteilhaft, wenn der obere Grenzwert für den Querschlupf, abhängig vom aktuellen Bremszustand bzw. vom aktuellen Längsschlupf, ermittelt wird. In diesem Fall werden vorteilhaft einem höheren Längsschlupf größere Grenzwerte für den Querschlupf zugeordnet, um auch bei Vollbremsungen eine Lenkbarkeit des Fahrzeugs zu gewährleisten.

### Bezugszeichen

- 2: lenkbare Räder
- 3: Hinterräder
- 4: Lenkorgan
- 6: elektronische Steuereinrichtung
- 8: Aktuator
- 12: Sensor
- 14: Gierratensensor
- 16: Lenkorganaktuator
- 18: Lenkwinkelsensor
- 20: Stellmotor
- 22: Ritzel
- 24: Zahnstange
- 26: Stange
- 28: Anlenkpunkt
- 30: Drehachse

## Patentansprüche

1. Lenkvorrichtung für ein untersteuernd ausgelegtes Kraftfahrzeug mit lenkbaren Vorderrädern (2), mit einem von einem Fahrer gegen die Wirkung einer Lenkkraft bzw. eines Lenkmoments betätigbaren Lenkorgan (4), mindestens einem auf die lenkbaren Räder (2) wirkenden, von einer elektronischen Steuereinrichtung (6) beeinflußbaren Aktuator (8) für den Einschlagwinkel der lenkbaren Räder, **dadurch gekennzeichnet, daß** eine Einrichtung (12, 14, 6) zur Ermittlung eines an den lenkbaren Rädern (2) auftretenden Querschlupfs vorgesehen ist, daß in der elektronischen Steuereinrichtung (6) ein oberer Grenzwert für den Querschlupf ermittelbar ist und daß mindestens ein Mittel (16, 8) vorgesehen ist, welches dazu dient, einer weiteren Vergrößerung des Einschlagwinkels entgegenzuwirken, wenn der ermittelte Querschlupf größer ist als der obere Grenzwert.

2. Lenkvorrichtung nach Anspruch 1, **dadurch gekennzeichnet, daß** das Mittel, welches einer weiteren Vergrößerung des Einschlagwinkels entgegenwirkt, der Aktuator (8) für den Einschlagwinkel ist, wobei die elektronische Steuereinrichtung (6) den Stellweg des Aktuators (8) bzw. der Aktuatoren (8) nach oben begrenzt, wenn der ermittelte Querschlupf größer ist als der obere Grenzwert.

3. Lenkvorrichtung nach Anspruch 1 oder 2, **dadurch gekennzeichnet, daß** das Mittel, welches einer weiteren Vergrößerung des Einschlagwinkels entgegenwirkt, ein Warnsignalgenerator (16) ist, welcher von der elektronischen Steuereinrichtung angesteuert wird, und der ein vom Fahrer wahrnehmbares Warnsignal erzeugt, wenn der ermittelte Querschlupf größer ist als der obere Grenzwert.

4. Lenkvorrichtung nach Anspruch 3, **dadurch gekennzeichnet, daß** der Warnsignalgenerator ein Lenkorganaktuator (16) ist, welcher bei Lenkvorrichtungen ohne mechanische Verbindung zwischen Lenkorgan (4) und Aktuator (8) dem Fahrer die Lenkkraft vermittelt.

5. Lenkverfahren für eine Lenkvorrichtung nach Anspruch 4, **dadurch gekennzeichnet, daß** vom Lenkorganaktuator (16) eine erhöhte Lenkkraft erzeugt wird, wenn der ermittelte Querschlupf größer ist als der obere Grenzwert.

6. Lenkverfahren nach Anspruch 5, **dadurch gekennzeichnet, daß** die erzeugte Lenkkraft beim Überschreiten des oberen Grenzwertes sprunghaft um einen vorgebbaren Betrag ansteigt.

7. Lenkverfahren für eine Lenkvorrichtung nach Anspruch 4 oder Lenkverfahren nach einem der Ansprüche 5 oder 6, **dadurch gekennzeichnet, daß** vom Lenkorganaktuator ein Vibrieren des Lenkorgans erzeugt wird, wenn der ermittelte Querschlupf größer ist als der obere Grenzwert.

8. Lenkverfahren für eine Lenkvorrichtung nach einem der Ansprüche 1 bis 4 oder Lenkverfahren nach einem der Ansprüche 5 bis 7, **dadurch gekennzeichnet, daß** der obere Grenzwert für den Querschlupf abhängig von einem aktuellen Bremszustand ermittelt wird, wobei einem höheren Längsschlupf größere Grenzwerte für den Querschlupf zugeordnet werden.

9. Lenkverfahren für eine Lenkvorrichtung nach Anspruch 2 oder Lenkverfahren nach Anspruch 8, **dadurch gekennzeichnet, daß** der Querschlupf für jedes gelenkte Rad individuell ermittelt wird, daß jedes gelenkte Rad von einem separaten Aktuator betätigt wird und daß die elektronische Steuereinrichtung den Stellweg jedes Aktuators individuell nach oben begrenzt, wenn der ermittelte Querschlupf an dem jeweiligen Rad größer ist als der obere Grenzwert.

## Claims

1. Steering apparatus for a motor vehicle designed with understeering and having steerable front wheels (2), comprising a steering element (4) operable by a driver counter to the action of a steering force and/or steering moment, at least one actuator (8) for the turning angle of the steerable wheels, which actuator acts upon the steerable wheels (2) and is influenceable by an electronic control device (6), **characterized in that** a device (12, 14, 6) for determining a transverse slip arising at the steerable wheels (2) is provided, that in the electronic control device (6) an upper limit value for the transverse slip is determinable and that at least one means (16, 8) is provided, which is used to counteract a further increase of the wheel turning angle when the determined transverse slip is greater than the upper limit value.

2. Steering apparatus according to claim 1, **characterized in that** the means of counteracting a further increase of the wheel turning angle is the actuator (8) for the wheel turning angle, wherein the electronic control device (6) limits the actuator travel of the actuator (8) or actuators (8) in an upward direction when the determined transverse slip is greater than the upper limit value.

3. Steering apparatus according to claim 1 or 2, **characterized in that** the means of counteracting a further increase of the wheel turning angle is a warning signal generator (16), which is activated by the electronic control device, and which generates a warning signal discernible by the driver when the determined transverse slip is greater than the upper limit value.

4. Steering apparatus according to claim 3, **characterized in that** the warning signal generator is a steering element actuator (16), which conveys the steering force to the driver in steering apparatuses without any mechanical connection between steering element (4) and actuator (8).

5. Steering method for a steering apparatus according to claim 4, **characterized in that** an increased steering force is generated by the steering element actuator (16) when the determined transverse slip is greater than the upper limit value.

6. Steering method according to claim 5, **characterized in that**, when the upper limit value is exceeded, the generated steering force increases suddenly by a preselectable amount.

7. Steering method for a steering apparatus according to claim 4 or steering method according to one of claims 5 or 6, **characterized in that** the steering element actuator causes the steering element to vibrate when the determined transverse slip is greater than the upper limit value.

8. Steering method for a steering apparatus according to one of claims 1 to 4 or steering method according to one of claims 5 to 7, **characterized in that** the upper limit value for the transverse slip is determined in dependence upon an actual braking state, wherein greater limit values for the transverse slip are associated with a higher longitudinal slip.

9. Steering method for a steering apparatus according to claim 2 or steering method according to claim 8, **characterized in that** the transverse slip is determined individually for each steered wheel, that each steered wheel is actuated by a separate actuator and that the electronic control device limits the actuator travel of each actuator individually in an upward direction when the determined transverse slip at the respective wheel is greater than the upper limit value.

## Revendications

1. Dispositif de direction pour un véhicule automobile conçu pour être sous-vireur, comprenant des roues avant directrices (2), un organe de direction (4) pouvant être actionné par le conducteur à l'encontre de l'action d'une force de direction ou d'un couple de direction par un actionneur (8) agissant sur les roues directrices (2) et qui peut être influencé par un dispositif de commande électronique (6), pour l'angle de braquage des roues directrices, **caractérisé en ce qu'**il est prévu un dispositif (12, 14, 6) pour détecter un glissement transversal qui se produit sur les roues directrices (2), **en ce que**, dans le dispositif de commande électronique (6), on peut détecter une valeur limite supérieure pour le glissement transversal, et **en ce qu'**il est prévu au moins un moyen (16, 18) qui sert à s'opposer à un accroissement additionnel de l'angle de braquage lorsque le glissement transversal détecté est supérieur à la valeur limite supérieure.

2. Dispositif de direction selon la revendication 1, **caractérisé en ce que** le moyen qui s'oppose à un accroissement additionnel de l'angle de braquage, est l'actionneur (8) prévu pour l'angle de braquage, le dispositif de commande électronique (6) limitant vers le haut la course de réglage de l'actionneur (8) ou des actionneurs (8) lorsque le glissement transversal détecté est supérieur à la valeur limite supérieure.

3. Dispositif de direction selon la revendication 1 ou 2, **caractérisé en ce que** le moyen qui s'oppose à un accroissement additionnel de l'angle de braquage est un générateur de signaux d'avertissement (16) qui est piloté par le dispositif de commande électronique et qui produit un signal d'avertissement pouvant être perçu par le conducteur lorsque le glissement transversal détecté est supérieur à la valeur limite supérieure.

4. Dispositif de direction selon la revendication 3, **caractérisé en ce que** le générateur de signaux d'avertissement est un actionneur de l'organe de direction (16) qui, dans le cas de dispositifs de direction sans liaison mécanique entre l'organe de direction (4) et l'actionneur (8), transmet la force de direction au conducteur.

5. Procédé de direction pour un dispositif de direction selon la revendication 4, **caractérisé en ce que** l'actionneur (16) de l'organe de direction produit une force de direction augmentée lorsque le glissement transversal détecté est supérieur à la valeur limite supérieure.

6. Procédé de direction selon la revendication 5, **caractérisé en ce que** la force de direction produite en cas de franchissement de la valeur limite supérieure, s'accroît brusquement d'une valeur pouvant être prédéterminée.

7. Procédé de direction pour un dispositif de direction selon la revendication 4, ou procédé de direction selon l'une des revendications 5 ou 6, **caractérisé en ce que** l'actionneur d'organe de direction produit une mise en vibration de l'organe de direction lorsque le glissement transversal détecté est supérieur à la valeur limite supérieure.

8. Procédé de direction pour un dispositif de direction selon l'une des revendications 1 à 4 ou procédé de direction selon l'une des revendications 5 à 7, **caractérisé en ce que** la valeur limite supérieure pour le glissement transversal est obtenue en fonction d'un état de freinage actuel, des valeurs limites plus élevées pour le glissement transversal étant associées à un glissement longitudinal plus fort.

9. Procédé de direction pour un dispositif de direction selon la revendication 2 ou procédé de direction selon la revendication 8, **caractérisé en ce que** le glissement transversal est détecté individuellement pour chaque roue directrice, **en ce que** chaque roue directrice est actionnée par un actionneur séparé, et **en ce que** le dispositif de commande électronique limite individuellement vers le haut la course de réglage de chaque actionneur lorsque le glissement transversal détecté sur la roue concernée est supérieur à la valeur limite supérieure.
